Europäisches Patentamt

European Patent Office

Office européen des brevets

(19)

(11) Publication number: **0 170 929**
**A2**

(12) # EUROPEAN PATENT APPLICATION

(21) Application number: **85108688.4**

(22) Date of filing: **11.07.85**

(51) Int. Cl.⁴: **C 23 F 13/02**

(30) Priority: **12.07.84 IT 2185284**

(43) Date of publication of application: **12.02.86**
**Bulletin 86/7**

(84) Designated Contracting States: **DE FR GB SE**

(71) Applicant: **ORONZIO DE NORA S.A., Via Cattedrale, 4,**
**CH-6900 Lugano (CH)**

(72) Inventor: **Bianchi, Giuseppe, Piazza Libia, 1,**
**I-20135 Milano (IT)**
Inventor: **Mussinelli, Gian Luigi, Via A. Pagani, 24, Como**
**(IT)**

(74) Representative: **Kinzebach, Werner, Dr., Patentanwälte**
**Reitstötter, Kinzebach und Partner Bauerstrasse 22,**
**D-8000 München 40 (DE)**

(54) **Electrode assembly for monitoring of cathodically protected structures.**

(57) The present invention concerns a novel electrodic assembly which is particularly advantageous for measuring the potential value of cathodically protected structures.

This electrodic assembly comprises a series of reference and auxiliary electrodic units (14) which are linearly distributed over the length of an electric cable (1) and coaxial to the cable itself. Each electrodic unit (14) is connected to a couple of current supply inlet and outlet wires (2, 2', 3, 3') of the cable (1). This couple is connected at the opposite end to a potential measuring device and/or to a power supply source.

The electrodic assembly of the present invention allows to measure the potential value of cathodic protection systems even when the electrodic units are under polarization.

0170929

- 1 -

ELECTRODE ASSEMBLY FOR MONITORING OF CATHODICALLY
PROTECTED STRUCTURES

The present invention pertains to a reference electrode
structure for controlling the efficiency of cathodic
protection systems.

Cathodic protection, as a system for preventing
corrosion of metal structures such as off-shore platforms, pipelines, wharfs, condensers and hulls, operating in natural environments such as sea-water, fresh
water or soil, is broadly known and utilized. It works
on the principle of electrochemically reducing the
oxygen diffusing towards the metallic surface to be
protected. Corrosion of the metal, i.e. steel or iron,
is therefore hindered, as the oxidating agent contained
in the environment results neutralized.

Cathodic protection can be applied by utilizing
either sacrificial anodes or, alternatively, by the
impressed current method. When the latter is used, the
structure to be protected is connected to the negative
pole of a power supply source and thus cathodically
polarized, while the anode, preferably made of a material
resistant to corrosion, is connected to the positive pole.

Anodic structures which may be advantageously utilized
according to the above technique are disclosed in Italian
patent applications nos. 19208 A/82 and 24356 A/83 by the

0170929

- 2 -

present applicant.

For both cathodic protection methods, monitoring of the various parameters is instrumental in order to assess the efficiency of the performance thereof. The most important parameter to be detected is the potential value of the protected structure. This value has to be maintained within the limits determined in consideration of the type of structure and environment wherein said structure operates.

The potential value is detected in proximity of the structure by resorting to reference electrodes which may be made of zinc, silver/silver chloride or calomel. The detected values are then collected and transmitted to a display unit by means of cables or sonar systems. The electrodes are periodically activated by impressing alternate or continuous current to prevent formation of seaweeds or biofouling onto the surface of the same. Measurement of the potential is effected only after the activation current has been shut off.

The most recent developments on cathodic potential monitoring systems, particularly as regards sea water applications, are exhaustively discussed by G.H. Backhouse on the Symposium Acta on "Cathodic Protection Theory and Practice - The Present Status" - Coventry Eurocrest Mod., Walsgrave, Coventry, 28th - 30th April 1982. The systems described in said report are, however, negatively affected by various evident drawbacks. Particularly, when the measured data are transmitted by cable, the inconvenients are due to the mechanical and chemical weakness of the cable itself, especially under critical environments, and to the large number of cables applied onto the structure to be monitored. Furthermore, measuring the cathodic potential only after turning off the activation current, does not allow one to determine the potential versus current relationship, the so-called polarization curve, which is a reliable test of the functionality of the electrode itself.

As regards the ultrasonic transmission, a noise-free reception is not always achievable, especially under adverse climate conditions. Moreover, in case of passivation (due to biofouling, seaweeds, variations of temperature) the reference electrodes cannot be activated and therefore periodical substitutions or maintenance are required.

The electrode assembly according to the present invention allows to overcome the disadvantages of the prior art technique. In fact, by the present invention the potential value is detected simultaneously at different points of the cathodically protected metal structure by means of reference electrodic units disposed in a single linear array, also during the activation phase, when the activation current is fed to the reference electrodic units.

The number of reference electrodic units to be utilized is determined taking into consideration the geometry of the metal structure and the number of critical points wherein

0170929

- 4 -

an accurate monitoring of the potential value is desirable. Said reference electrodic units are made of a suitable material, capable of undergoing the particular operating conditions, such as zinc, silver, coated titanium and, excepted in sea-water applications, copper.

A single electrode assembly may be also provided having reference electrodic units made of different materials in order to make a comparison between the various readings and to increase the overall realiability of the system.

Zinc or silver reference electrodic units may be activated by impressing current from a current supply source outside the system or, according to a preferred embodiment of the present invention, through galvanic coupling between the reference electrodic unit itself and the remaining part of the electrode assembly, for example made of titanium, which acts as a cathodic surface. Continuous activation is thus provided, which allows for a continuous protection against biofouling also during possible long-term shut-downs of the system.

Auxiliary electrodic units (cathodes) are provided onto the same electrode assembly in those cases where the reference electrodic units are activated by means of an externally impressed current. These auxiliary electrodic units are made of different materials, such as titanium, copper alloys and/or aluminum and ferrous alloys.

Some preferred embodiments of the invention are hereinbelow described with reference to exemplifying drawings and

0170929

- 5 -

example which are not, however, intended to illustrate all possible forms and modifications within the scope of the invention. Referring to the drawings :

Fig. 1 is a schematic, longitudinal cross-sectional view of a particular embodiment of the electrode assembly of the present invention, wherein only two electrodic units are illustrated, for simplicity sake;

Fig. 2 is a transversal cross-sectional view along lines A-A of the assembly illustrated in Fig. 1, and

Fig. 3 is a schematic view of another embodiment of the electrode assembly of the present invention.

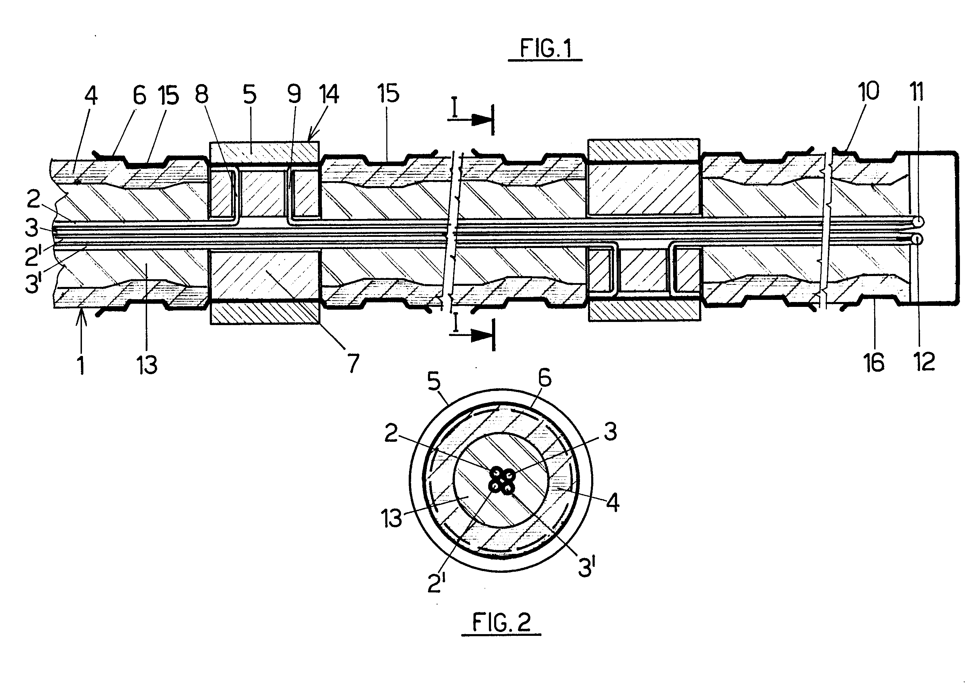

The electrode assembly illustrated in Fig. 1 is constituted by a multipolar electric cable 1, comprising a determined number (two in the Figure) of couples of insulated inlet and outlet wires 2, 3, 2' and 3'. These wires are covered by an insulating sheath 4 of a suitable plastic material. The electrodic units 14, in a number corresponding to the number of wires couples (two in the Figure) are coaxially disposed onto said cable 1. Each electrodic unit consists of anular electrodes 5, made of silver or zinc, which are electrically and mechanically connected to metallic sleeves 6, preferably made of titanium, which are in turn coaxially fixed onto cable 1 by plastically deforming inwardly these sleeves in proximity of their ends (as in 15), external pressure being applied thereto by means of a suitable tool, in order to ensure leak-proof insulation. Sheath 4 is previously cut in correspondence of each electrodic unit and substituted by suitable current distributing

0170929

- 6 -

members 7, preferably made of copper, whose external surface is held in electrical contact with the sleeves 6, this contact being obtained by plastically deforming, as described before, electrodes 5 and consequently sleeves 6, underneath. The current distributing members are also held in contact with the terminals 8 and 9, of one of the inlet and outlet wires 2, 3, 2' and 3', which are short-circuited pair by pair, 11 and 12, at the end of the cable, so that each electrodic unit becomes part of the electric circuit defined by each couple of inlet and outlet wires.

The terminals 8 and 9 may be welded to the current distributing members 7, or inserted in suitable holes or slots provided therein.

The short-circuited pairs 11 and 12 are both electrically insulated and a metallic cap 10, preferably made of titanium, is plastically deformed onto the cable, as in 16, by applying an external pressure, in order to ensure leak-proof insulation. Alternatively, a single outlet wire may be utilized, which is short-circuited to all the inlet wires at the end of the cable. Finally, each electrode may be connected to only one terminal of each wire, but in this case the potential readings can be made only after turning off the activation current.

Obviously, the number of electrodes to be utilized, as well as the number of relevant couples of inlet and outlet wires will be determined on the basis of the particular requirements imposed by the characteristics of the structure to be monitored.

The electrode assembly according to the present invention will usually comprise three to ten reference electrodic units and one to three auxiliary electrodic units, suitably disposed and spaced apart along the cable, so that the most critical points of the structure to be controlled are all monitored.

As far as the assembling procedure is concerned, the cable 1 is first tripped off of the insulating sheath 4 for suitable lenghts, in those positions where the electrodic units are to be inserted. In each of these positions, one of tje connecting wires 2, 3, 2' and 3' is cut and its insulating sheath is tripped off. Then the current distributing member 7, preferably made of copper, constituted by two or more anular sectors, and provided with suitable holes or slots, or similar connecting devices, is inserted in place and the stripped-off terminals 8 and 9 are welded or pressed into the holes or slots. The outer diameter of the current distributing member 7 is substantially equal to the external diameter of the cable 1.

Finally, a sleeve 6, bearing an electrode 5, having an internal diameter slightly larger than the outer diameter of the cable, is slipped along the cable onto the preassembled current distributing member 7 and the unit is plastically deformated inwardly by applying external pressure in proximity of both ends (as in 15) and at the central section, in correspondence of the electrode 5. A reliable sealing and electrical contact is thus obtained.

0170929

- 8 -

Figure 2 shows a cross section along line A - A of Figure 1. The external insulating sheath 4 of the cable 1 is made of a suitable plastic material, such as polyethylene, sulphochlorinated polyethylene (Hypalon (R) of Du Pont), while the inlet and outlet wires 2, 3, 2' and 3', which are coated by a coloured polyvinyl chloride layer, are embedded in butylic or ethylenepropylenic rubber 13.

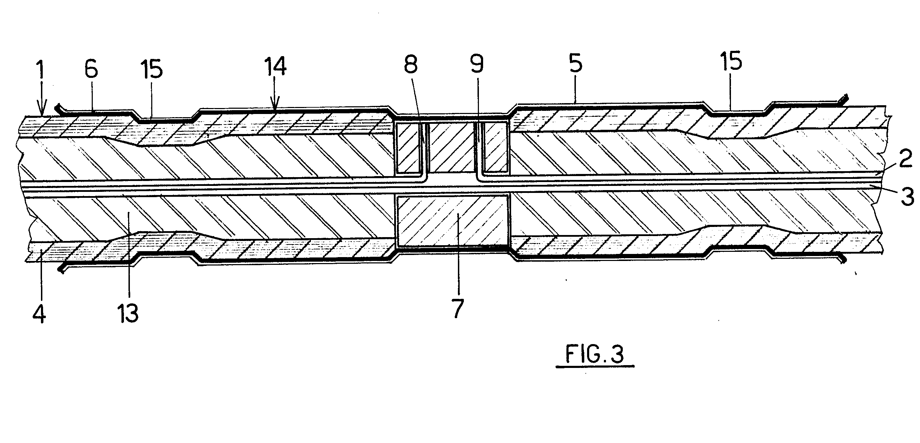

Figure 3 shows a further embodiment of the present invention, wherein, for simplicity sake, only one couple of wires is illustrated. In this embodiment the electrodic unit is constituted of a titanium sleeve 6, similar to that one of Fig. 1, but coated with an electrocatalytic coating 5, based on oxides for examples of metals belonging to the platinum group. The same parts illustrated also in Fig. 1 are designated by the same reference numerals.

Substantially this electrode exhibits a rest potential varying within a limited range, but it is characterized by well defined values under anodic polarization utilizing suitable current density. This type of electrode requires a higher current input than the electrodes of Fig. 1, made of zinc or silver, but it allows for a more accurate elimination of biofouling phenomena.

The electrodic unit illustrated in Fig. 3 may also be a typical auxiliary electrode, made of titanium or copper alloys and/or aluminum alloys or ferrous material.

Both embodiments illustrated in Fig. 1 and Fig. 3 are normally provided with an external flexible tubular jacket, not shown in the figures, covering the portions of the cable extending between the electrodes to protect the cable against

- 9 -

mechanical stresses or abrasion. Depending on the electrolyte wherein the structure operates, said jacket may be made or iron, aluminum, copper or alloys thereof and is fixed onto the plastic sheath by interposing onto the end sections of the jacket a ring of titanium or other non corrodible material, then it is finally plastically deformed  inwardly by applying external pressure in the way described above.

It has to be understood that all possible modifications of the apparatus of the present invention, which are obvious to a person skilled in the art, may be made without departing from the scope thereof.  For example, the electrodic unit structure may have a different cross-section besides the circular one, e.g.  a polygonal or star cross section. Moreover, the material utilized for the electrodic units (particularly the electrocatalytic coating) and the protection jacket may be different from the ones recited above. In fact, it is possible to use any of the materials which are well-known to a person skilled in the art. These materials and the size and shape of the various elements will vary depending on the different applications thereof.  Particularly, the leak-proof sealing of the interstice between electrodic unit and cable may be carried out by pouring into this interstice suitable plastic materials which are well-known to a person skilled in the art.

The following example illustrates an electrode assembly according to the present invention and its use in the cathodic protection system of an off-shore platform.

EXAMPLE

An electrode assembly according to the present invention has been provided comprising six reference electrodic units and two auxiliary electrodic units, applied onto a cable having an external diameter of 22 mm and comprising fourteen copper wires having a section of 2 $mm^2$.

The six reference electrodic units have been spaced 6 m apart and the two auxiliary electrodic units have been placed at the beginning and at the end of the array. Three of the reference electrodic units were made of silver and the remaining three electrodic units were made of activated titanium. The auxiliary electrodic units were made of titanium.

The reference electrodic units made of silver had been prepared as follows :

- a titanium sleeve having a diameter of 25.4 x 250 mm had been electrically connected, by means of a current distributing member to a wire;

- a silver collar electrode having an internal diameter of 32 mm and a length of 51 mm had been superimposed to the titanium sleeve

- an inlet wire had been short-circuited to an outlet wire at one end of the cable and the junction had been accurately insulated

- the end of the cable, with all the short-circuited insulated pairs, is sealed by a titanium sleeve having a diameter of 25.4x500 mm and one end leak-proof closed by a cap. This titanium sleeve is also electrically connected to a current distributing member and it constitutes one of the two auxiliary electrodes.

The activated titanium electrodes consisted of a titanium sleeve having a diameter of 25.4 x 250 mm, connected to a wire as described above.

The two auxiliary electrodic units, placed respectively at the beginning and at the end of the array, were connected in series to one couple of wires and consisted of a titanium sleeve having a diameter of 25.4 x 500 mm.

The assembly has been applied onto an off-shore platform at a depth of 30 m underwater, along one of the platform supports in order to position the reference electrodic units in correspondence of the structural knots of the legs.

The following procedure was followed for each of the reference electrodic units : one of the two wires in electrical contact with the reference electrode was inserted in the positive polarity of an external direct current source, the negative polarity being connected with one of the two wires (or both) in electrical contact with the auxiliary electrodic units. An electronic, high input impedance, portable voltmeter was then connected to the second wire in electrical contact with the reference electrodic unit and to the cathodically protected metal structure. The current was turned on and the potential readings were recorded. Data were also collected after the activation current was turned off.

The electrodes made of silver/silver chloride were activated on site by impressing 400 mA for about ten minutes.

After preparing the electrodes as aforesaid, the potential values of the structure were measured, obtaining as a result 950 mV - 880 mV, 900 mV, which confirmed the polarization values of the platform detected for comparison by divers who utilized movable reference electrodes made of zinc. Measurement of the potential with activated titanium reference electrodes had been effected by impressing 2 A through the inlet wire and detecting the potential value by using the outlet wire. The detected potential values of the platform were + 580 mV, + 465 mV, + 430 mV, which, after the necessary conversion, confirmed the values obtained by the divers within a range of ± 10 mV.

The electrodic assembly is presently operating automatically and the monitoring system thus provided allows to transmit at regular intervals the potential values of the platform under cathodic protection, which values are detected in correspondence of the points whereto the reference electrodic units have been applied.

CLAIMS :

1.    An electrode assembly for monitoring the potential value of cathodically protected metal structures, characterized in that it comprises : a determined number of electrodic units (14) including reference electrodic units and auxiliary electrodic units; a multipolar electric cable (1) having a number of couples of insulated inlet and outlet wires (2, 3, 2' and 3') corresponding to said number of electrodic units, said electrodic units (14) linearly distributed over the lenght of said cable (1) and mechanically connected thereto, an electrical connection (7) provided between the two wires of the relevant electrodic unit, said electrical connection (7) electrically insulated against the operating environment; and a potential measuring device and/or current supply source, the two wires of each of said wire couples, which are electrically connected to each one of said electrodic units (14), being connected to the positive polarity of said potential measuring device and/or current supply source, the negative polarity of said potential measuring device and/or current supply source being connected to the cathodically protected structure or to said auxiliary electrodic unit(s) (14).

2.    Electrode assembly of claim 1, characterized in that said reference electrodic units (14) include a titanium sleeve (6) mechanically connected to said cable (1) and coaxial thereto, said sleeve (6) electrically connected to the two wires of the relevant wire couple (2, 3, 2' and 3'); and an anular electrode (5) of silver or zinc, which is

- 14 -

coaxial to said cable (1) and mechanically and electrically connected thereto.

3. Electrode assembly of claim 1, characterized in that said reference electrodic units (14) consist of a titanium sleeve (6) mechanically connected to said cable (1) and coaxial thereto, said sleeve (6) electrically connected to the two wires of said relevant wire couple (2, 3, 2', 3') said sleeve having an electrocatalytically active coating (5) of oxides of metals belonging to the platinum group.

4. Electrode assembly of any of the preceding claims, characterized in that said auxiliary electrodic units (14) consists of a sleeve (6). made of titanium, copper alloys and/or aluminum alloys, and ferrous materials.

5. Electrode assembly of claims 2 to 4, characterized in that said electrical connection (7) between said electrodic units (14) and the two wires of said relevant wire couple (2, 3, 2', 3') is performed by a current conducting member (7) constituted by two or more anular sectors and placed within said cable (1) in the place of a removed section of the electrical insulation of said cable and non-protuding out of the cable periphery, said sleeve (6) in correspondence of said current conducting member (7) is apted to be plastically deformed by applying an external pressure thereto so that an electrical connection between said connecting member (7) and sleeve (6) is performed.

6. Electrode assembly of claim 5, characterized in that said sleeve (6) is apted to be deformed in proximity of its ends (15) by applying an external pressure thereto so that a sealing between said cable (1) and sleeve (6) is obtained.

7. Electrode assembly of claims 1, 2 and 3, characterized in that the reference electrodic units (14) are of different materials and one or more of them are used as internal standards.

8. Electrode assembly according to any of the preceding claims, characterized in that the portion of said cable (1) between said electrodic units (14) is protected by a flexible jacket of a corrosion resistant material and able to assure a mechanical protection.

0170929

FIG.1

FIG.2

FIG.3

0170929